# EUROPÄISCHE PATENTANMELDUNG

(11) **EP 2 522 861 A1**
(43) Veröffentlichungstag der Anmeldung: **14.11.2012**
(21) Anmeldenummer: 12167050.9
(22) Anmeldetag: 08.05.2012
(51) Int. Cl.: F16B 11/00

(54) **Tragrahmen**

(30) Priorität: 12.05.2011 DE 102011101454
(71) Anmelder: DE-STA-CO Europe GmbH, 61440 Oberursel (DE)
(72) Erfinder: Ulle, Detlev, 97645 Ostheim (DE)
(74) Vertreter: Wolf, Michael

(57) **Zusammenfassung**

Die Erfindung betrifft einen Tragrahmen, umfassend Rohrelemente (1), die über Knotenelemente (2) miteinander verbunden ausgebildet sind, wobei sowohl die Rohrelemente (1) als auch die Knotenelemente (2) aus faserverstärktem Kunststoff gebildet sind. Nach der Erfindung ist vorgesehen, dass die Rohrelemente (1) mit den Knotenelementen (2) stoffschlüssig verbunden ausgebildet sind.

## Beschreibung

Die Erfindung betrifft einen Tragrahmen gemäß dem Oberbegriff des Patentanspruchs 1.

Ein Tragrahmen der eingangs genannten Art ist nach der EP 1 607 638 B1 bekannt. Dieser besteht aus Rohrelementen, die über (aus Schalen gebildete) Knotenelemente miteinander verbunden ausgebildet sind, wobei sowohl die Rohrelemente als auch die Knotenelemente aus faserverstärktem Kunststoff gebildet sind. Die Knotenelemente sind bei dieser Konstruktion als miteinander verschraubbare Klemmschellen ausgebildet.

Ein Tragrahmen dieser Art dient (wie in der EP 1 607 638 B1 beschrieben) zum Beispiel im Automobilbau zur Aufnahme von Spannvorrichtungen oder dergleichen, mit denen Blechteile während des Schweißvorgangs zusammengehalten werden. Da ein solcher Tragrahme an einem Roboterarm befestigt ist und mit bzw. von diesem bewegt wird, sollte seine Masse bei entsprechender Steifigkeit so gering wie möglich sein.

Der Vollständigkeit halber wird in diesem Zusammenhang noch auf die weiter abliegende Lösung gemäß der WO 2010/126405 A1 hingewiesen.

Der Erfindung liegt die Aufgabe zugrunde, einen Tragrahmen der eingangs genannten Art zu verbessern. Insbesondere soll ein Tragrahmen geschaffen werden, der noch leichter und noch zuverlässiger ist.

Diese Aufgabe ist mit einem Tragrahmen der eingangs genannten Art durch die im Kennzeichen des Patentanspruchs 1 aufgeführten Merkmale gelöst.

Nach der Erfindung ist also vorgesehen, dass die Rohrelemente mit den Knotenelementen stoffschlüssig verbunden ausgebildet sind.

Mit anderen Worten sind bei der erfindungsgemäßen Tragrahmenkonstruktion die Rohr- und Knotenelemente nicht mehr miteinander verschraubt, sondern verklebt; somit sind die Rohrelemente verschraubungsfrei mit den Knotenelementen verbunden ausgebildet. Darüber hinaus ist aber auch noch bevorzugt vorgesehen, dass die Rohrelemente selbst verschraubungsfrei miteinander verbunden ausgebildet sind. Diese an sich widersinnig erscheinende Maßgabe hat den Vorteil, dass einerseits auf Schrauben zum Verbinden der Rohr- und Knotenelemente verzichtet werden kann und dass andererseits durch das Kleben nachlassende Klemmkräfte, wie sie immer wieder zu beobachten sind, sicher ausgeschlossen werden können. Darüber hinaus können beim erfindungsgemäßen Tragrahmen, was noch genauer erläutert wird, die Rohr-und Knotenelemente in einer Ebene angeordnet werden, was die spätere Bestückung des Tragrahmens mit Spannvorrichtungen und dergleichen erleichtert bzw. verbessert.

Die Maßgabe, dass die Rohrelemente mit den Knotenelementen stoffschlüssig verbunden sind, umfasst dabei die weiter unten erläuterte Option, dass beide Teile über ein so genanntes, wahlweise innen oder auch außenliegendes Verbinderelement miteinander verklebt sind.

Andere vorteilhafte Weiterbildungen ergeben sich aus den abhängigen Patentansprüchen.

Der erfindungsgemäße Tragrahmen einschließlich seiner vorteilhaften Weiterbildungen gemäß der abhängigen Patentansprüche wird nachfolgend anhand der zeichnerischen Darstellung eines bevorzugten Ausführungsbeispiels näher erläutert.

Es zeigt
- Figur 1: perspektivisch den erfindungsgemäßen Tragrahmen aus acht Rohrelementen, neun Knotenelementen und achtzehn Verbinderelementen;
- Figur 2: perspektivisch in Explosionsdarstellung exemplarisch eine Rohr-Rohr-Verbindung mit Verbinderelement für den erfindungsgemäßen Tragrahmen;
- Figur 3: perspektivisch ein Knotenelement für ein freies Ende eines Rohrelements;
- Figur 4: perspektivisch in Explosionsdarstellung ein Knotenelement zur abgewinkelten Verbindung von zwei Rohrelementen;
- Figur 5: perspektivisch ein Knotenelement zur Verbindung von drei Rohrelementen;
- Figur 6: perspektivisch in Explosionsdarstellung ein Knotenelement zur Verbindung von vier Rohrelementen;
- Figur 7: perspektivisch, teilweise geschnitten und als Explosionsdarstellung eine bevorzugte Ausführung eines Anbindungsbereichs an einem Knotenelement; und
- Figur 8: perspektivisch und geschnitten den montierten Anbindungsbereich gemäß Figur 7.

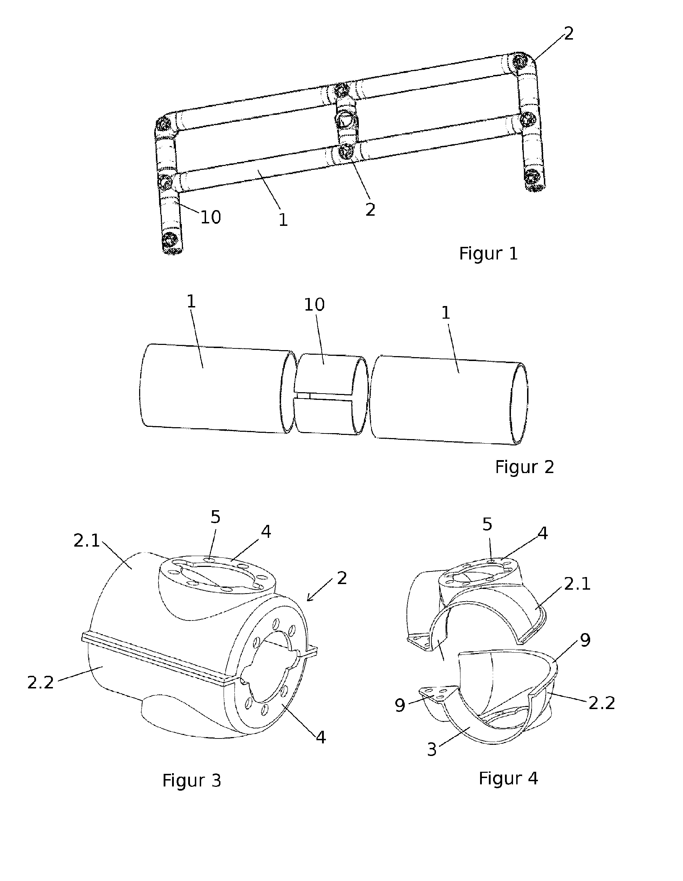

Der in Figur 1 dargestellte Tragrahmen zur Aufnahme von Spannvorrichtungen und dergleichen besteht in bekannter Weise aus im Querschnitt kreisförmigen Rohrelementen 1 (wobei selbstverständlich auch andere Querschnitte in Betracht kommen), die über Knotenelemente 2 miteinander verbunden ausgebildet sind. Sowohl die Rohrelemente 1 als auch die Knotenelemente 2 sind dabei wahlweise aus glas- oder kohlefaserverstärktem Kunststoff gebildet. Die Knotenelemente 2 sind jeweils aus Schalen 2.1, 2.2, insbesondere baugleichen Halbschalen, gebildet. Wesentlich für den erfindungsgemäßen Tragrahmen ist nun, dass die Rohrelemente 1 mit den Knotenelementen 2 stoffschlüssig verbunden, insbesondere verklebt, ausgebildet sind. Besonders bevorzugt ist darüber hinaus vorgesehen, dass auch die Schalen 2.1, 2.2 miteinander stoffschlüssig verbunden ausgebildet sind.

Wie eingangs erläutert, führt diese Maßgabe zwar dazu, dass ein einmal zusammengeklebter Tragrahmen nur noch für den entsprechend vorgesehenen Anwendungszweck verwendet werden kann, dieser Nachteil wird aber dadurch mehr als kompensiert, dass der erfindungsgemäße Tragrahmen sehr leicht, aber gleichzeitig auch dauerhaft sehr stabil ist. Darüber hinaus führt der Verzicht auf die vorgenannten Klemmschellen dazu, dass alle Rohrelemente 1 in einer Ebene liegend angeordnet werden können, was wiederum für die Kompaktheit des Tragrahmens günstig ist (siehe Figur 1).

Wie aus den Figuren 3 bis 6 ersichtlicht, ist weiterhin bevorzugt vorgesehen, dass das Knotenelement 2 wahlweise an einem freien Ende des Rohrelements 1 (siehe Figur 3) angeordnet oder zur Verbindung von mindestens zwei Rohrelementen 1 ausgebildet ist (siehe Figur 4 bis 6). Die Rohrelemente 1 sind dabei vorzugs- und wahlweise zueinander längserstreckt oder im rechten Winkel zueinander angeordnet. Alternativ (nicht dargestellt) kommen bedarfsweise aber auch nicht parallele bzw. nicht rechtwinklige Anordnungen in Betracht.

Weiterhin ist erfindungsgemäß bevorzugt vorgesehen, dass wahlweise zwischen einem Rohrelement 1 und einem Knotenelement 2, zwischen zwei Rohrelementen 1 oder zwischen zwei Knotenelementen 2 ein ebenfalls aus faserverstärktem Kunststoff gebildetes Verbinderelement 10 angeordnet ist. Dabei sind sowohl das Rohrelement 1 als auch das Knotenelement 2 mit dem Verbinderelement 10 verklebt.

Zur Verbindung der Rohrelemente 1 mit den Knotenelementen 2 etc. ist ferner vorgesehen, dass die Schalen 2.1, 2.2 jeweils wahlweise mindestens einen an das Rohrelement 1 (nicht dargestellt) oder an das Verbinderelement 10 (dargestellt) angepassten Aufnahmebereich 3 aufweisen. Dieser das Rohrelement 1 bzw. das vorzugsweise zylinderförmig bzw. zylinderartig und längsgeschlitzt ausgebildete Verbinderelement 10 passgenau umschlie-βende Aufnahmebereich 3 bildet dabei rohr- bzw. verbinderelementseitig eine Auftragsfläche für den Klebstoff.

Wie sich aus den Figuren 1 und 2 ergibt (in Figur 1 lediglich per Schattierung angedeutet dargestellt), bildet das eingeklebte, im Vergleich zum Rohrelement 1 durchmesserkleinere Verbinderelement 10 bei dieser bevorzugten Ausführungsform die Verbindung zwischen zwei Teilen (nämlich dem Rohrelement 1 und dem Knotenelement 2); dazu ist es jeweils mit beiden Teilen stoffschlüssig verbunden bzw. verklebt. Darüber hinaus sind die Schalen 2.1, 2.2 mit sich gegenseitig berührenden Kontaktflächenbereichen 9 zum Auftragen von Klebstoff versehen. Durch diese zusätzliche Klebefläche wird die Konstruktion des Tragrahmens weiter verstärkt.

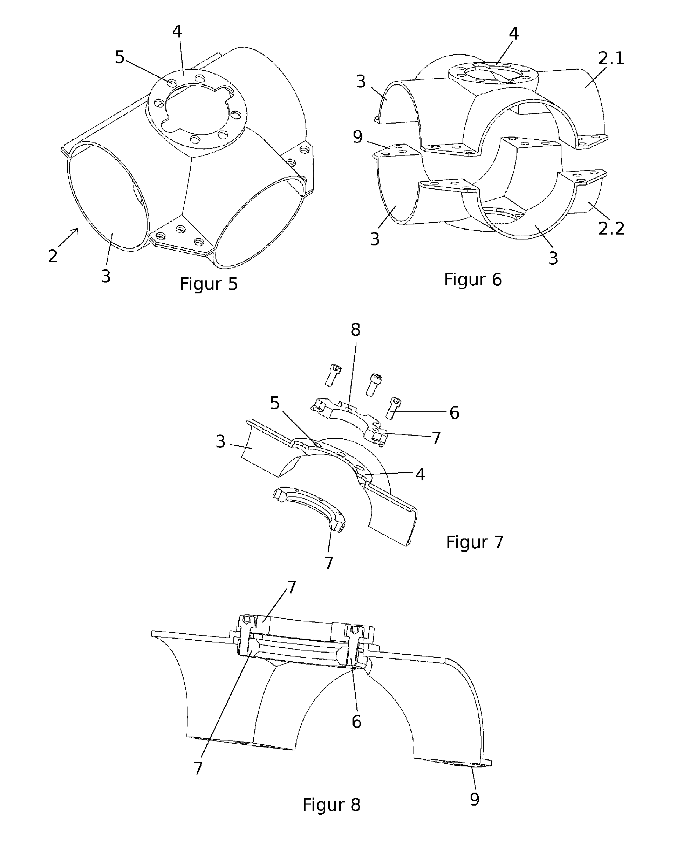

Ferner sind am Knotenelement 2 mehrere Anschlussbereiche 4 für ein Werkzeug, eine Spannvorrichtung oder dergleichen vorgesehen: Figur 3 zeigt ein Knotenelement mit drei Anschlussbereichen 4, in den Figuren 4 bis 6 sind Knotenelemente mit jeweils zwei Anschlussbereichen 4 dargestellt, wobei weiterhin an jedem Anschlussbereich 4 vorzugsweise mindestens eine Durchgangsöffnung 5 für ein Verbindungselement 6 vorgesehen ist. Dieses Verbindungselement 6 ist mit Verweis auf die Figuren 7 und 8 besonders bevorzugt als Schraube ausgebildet, wobei bei den dargestellten Ausführungsbeispielen jeweils insgesamt sechs Durchgangsöffnung 5 für solche Verbindungselemente 6 vorgesehen sind.

Da der Anschlussbereich 4 als Teil des Knotenelements 2 ausgebildet ist, besteht er wie dieses aus faserverstärktem Kunststoff. Um die Stabilität dieses durch ein Werkzeug oder dergleichen belasteten Anschlussbereichs 4 zu verbessern, ist am Anschlussbereich 4 mindestens ein Flanschelement 7 angeordnet. Dieses Flanschelement 7 besteht aus einem metallischen Werkstoff (Aluminium, Edelstahl oder dergleichen), wobei, wie die Figuren 7 und 8 zeigen, besonders bevorzugt beidseitig des Anschlussbereichs 4 Flanschelemente 7 (Innen- und Außenflansch) vorgesehen sind, die vorzugsweise über mindestens ein Verbindungselement 6 miteinander verbunden ausgebildet sind. Dabei ist der Anschlussbereich 4 als ebene Anschlussfläche und das Flanschelement 7 flach auf der Anschlussfläche aufliegend ausgebildet. Zur Befestigung des Werkzeugs oder dergleichen sind am Flanschelement 7 Verbindungselement 8, insbesondere (siehe Figur 7) Gewindebohrungen 8 angeordnet, wobei das Flanschelement 7 (und zwar sowohl der Innen- als auch der Außenflansch) besonders bevorzugt als ebenflächiger Kreisring ausgebildet ist.

### Bezugszeichenliste

- 1: Rohrelement
- 2: Knotenelement
- 2.1: Schale
- 2.2: Schale
- 3: Aufnahmebereich
- 4: Anschlussbereich
- 5: Durchgangsbohrung
- 6: Verbindungselement
- 7: Flanschelement
- 8: Verbindungselement
- 9: Kontaktflächenbereich
- 10: Verbinderelement

## Patentansprüche

1. Tragrahmen, umfassend Rohrelemente (1), die über Knotenelemente (2) miteinander verbunden ausgebildet sind, wobei sowohl die Rohrelemente (1) als auch die Knotenelemente (2) aus faserverstärktem Kunststoff gebildet sind,
**dadurch gekennzeichnet,**
**dass** die Rohrelemente (1) mit den Knotenelementen (2) stoffschlüssig verbunden ausgebildet sind.

2. Tragrahmen nach Anspruch 1,
**dadurch gekennzeichnet,**
**dass** die Knotenelemente (2) aus Schalen (2.1, 2.2) gebildet sind.

3. Tragrahmen nach Anspruch 2,
**dadurch gekennzeichnet,**
**dass** die Schalen (2.1, 2.2) stoffschlüssig miteinander verbunden ausgebildet sind.

4. Tragrahmen nach einem der Ansprüch 1 bis 3,
**dadurch gekennzeichnet,**
**dass** wahlweise zwischen einem Rohrelement (1) und einem Knotenelement (2), zwischen zwei Rohrelementen (1) oder zwischen zwei Knotenelementen (2) ein Verbinderelement (10) angeordnet ist.

5. Tragrahmen nach einem der Ansprüch 1 bis 4,
**dadurch gekennzeichnet,**
**dass** das Knotenelement (2) wahlweise an einem freien Ende des Rohrelements (1) angeordnet oder zur Verbindung von mindestens zwei Rohrelementen (1) ausgebildet ist.

6. Tragrahmen nach Anspruch 2 oder 4,
**dadurch gekennzeichnet,**
**dass** die Schalen (2.1, 2.2) jeweils mindestens einen wahlweise an das Rohrelement (1) oder an das Verbinderelement (10) angepassten Aufnahmebereich (3) aufweisen.

7. Tragrahmen nach einem der Ansprüche 1 bis 6,
**dadurch gekennzeichnet,**
**dass** am Knotenelement (2) mindestens ein Anschlussbereich (4) für ein Werkzeug vorgesehen ist.

8. Tragrahmen nach Anspruch 7,
**dadurch gekennzeichnet,**
**dass** am Anschlussbereich (4) mindestens eine Durchgangsöffnung (5) für ein Verbindungselement (6) vorgesehen ist.

9. Tragrahmen nach Anspruch 7 oder 8,
**dadurch gekennzeichnet,**
**dass** am Anschlussbereich (4) mindestens ein Flanschelement (7) angeordnet ist.

10. Tragrahmen nach Anspruch 9,
**dadurch gekennzeichnet,**
**dass** beidseitig des Anschlussbereichs (4) Flanschelemente (7) vorgesehen sind, die vorzugsweise über mindestens ein Verbindungselement (6) miteinander verbunden ausgebildet sind.

11. Tragrahmen nach einem der Ansprüche 7 bis 10,
**dadurch gekennzeichnet,**
**dass** der Anschlussbereich (4) als ebene Anschlussfläche ausgebildet ist, wobei vorzugsweise das Flanschelement (7) flach auf der Anschlussfläche aufliegend ausgebildet ist.

12. Tragrahmen nach einem der Ansprüche 9 bis 11,
**dadurch gekennzeichnet,**
**dass** am Flanschelement (7) mindestens ein Verbindungselement (8), vorzugsweise eine Gewindebohrung, zur Befestigung eines Werkzeugs angeordnet ist.

13. Tragrahmen nach einem der Ansprüche 1 bis 12,
**dadurch gekennzeichnet,**
**dass** die Rohrelemente (1) verschraubungsfrei mit den Knotenelementen (2) verbunden ausgebildet sind.

14. Tragrahmen nach einem der Ansprüche 1 bis 13,
**dadurch gekennzeichnet,**
**dass** die Rohrelemente (1) verschraubungsfrei miteinander verbunden ausgebildet sind.
